(19) Europäisches Patentamt / European Patent Office / Office européen des brevets

(11) **EP 3 900 979 B1**

(12) **EUROPÄISCHE PATENTSCHRIFT**

(45) Veröffentlichungstag und Bekanntmachung des Hinweises auf die Patenterteilung:
**16.07.2025 Patentblatt 2025/29**

(21) Anmeldenummer: **21168941.9**

(22) Anmeldetag: **16.04.2021**

(51) Internationale Patentklassifikation (IPC):
***B60N 2/75*** *(2018.01)*

(52) Gemeinsame Patentklassifikation (CPC):
**B60N 2/767; B60N 2/797**

(54) **ARMLEHNENELEMENT MIT ZUSATZMODUL**

ARMREST ELEMENT WITH ADD-ON MODULE

ÉLÉMENT ACCOUDOIR POURVU DE MODULE SUPPLÉMENTAIRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.04.2020 DE 102020110772**

(43) Veröffentlichungstag der Anmeldung:
**27.10.2021 Patentblatt 2021/43**

(73) Patentinhaber: **GRAMMER AG**
**92289 Ursensollen (DE)**

(72) Erfinder: **Haller, Erwin**
**92262 Birgland (DE)**

(74) Vertreter: **Hannke Bittner & Partner mbB**
**Regensburg**
**Prüfeninger Straße 1**
**93049 Regensburg (DE)**

(56) Entgegenhaltungen:
**DE-A1- 10 110 330     DE-A1- 102012 010 666**

## Beschreibung

Die Erfindung betrifft ein Zusatzmodul für ein Armlehnenelement eines Sitzes insbesondere eines Fahrzeugsitzes. Weiterhin betrifft die Erfindung eine Armlehnenanordnung für einen Sitz, insbesondere für einen Fahrzeugsitz mit einem Armlehnenelement, an welchem ein Zusatzmodul angeordnet ist. Ferner betrifft die Erfindung einen Fahrzeugsitz mit einer Armlehnenanordnung.

Derartige Armlehnenanordnungen werden beispielsweise in Nutzfahrzeugen wie Traktoren, Staplern, Baumaschinen und Sonderfahrzeuge verwendet. Es besteht die Möglichkeit in der Armlehne verschiedenste Steuerungsfunktionen zu integrieren. Derartige Steuerungsfunktionen können den Fahrzeugsitz betreffen oder aber auch anderweitige Einrichtungen im Fahrzeug. Es kann auch wünschenswert sein, Kommunikationseinrichtungen oder diverse Anzeigeeinrichtungen in den Armlehnen zu integrieren. Schließlich kann es erwünscht sein Ablageeinrichtungen, wie beispielsweise Cupholder oder Ähnliches in oder an den Armlehnen vorzusehen. Die Integration derartiger Einrichtungen erfordert, je nach Kundenwunsch verschiedenste Designs für die Armlehnenanordnungen. Dies bedeutet für die Hersteller einen großen Aufwand. Darüber hinaus kann es erwünscht sein, dass bereits bestehende Fahrzeugsitze beziehungsweise Armlehnen im Nachhinein mit derartigen Einrichtungen ausgestattet werden sollen. Bestehende Armlehnen können jedoch bereits mit Einrichtungen beispielsweise zur Einstellung der Neigung der Armlehne ausgestattet sein. Diese Funktionalitäten sollen bei einer Umgestaltung nicht beeinträchtigt werden.

Aus dem Stand der Technik ist das Dokument DE 101 10 330 A1 bekannt. Dieses Dokument zeigt eine Mittelkonsole mit einer Armauflage. Die Armauflage ist mit einem verschwenkbaren Deckel versehen. Die Höhe der Armauflage kann mittels eines Zahnradgetriebes und eines elektrischen Antriebs eingestellt werden.

Aufgabe der vorliegenden Erfindung ist es somit ein Zusatzmodul für ein Armlehnenelement bereitzustellen, welches die eingangs genannten Probleme löst.

Die Aufgabe wird gelöst von einem Zusatzmodul für ein Armlehnenelement eines Sitzes insbesondere eines Fahrzeugsitzes gemäß des vorliegenden Anspruchs 1. Erfindungsgemäß ist das Zusatzmodul an dem Armlehnenelement anordenbar, wobei in dem Zusatzmodul eine Übertragungseinrichtung vorgesehen ist, mittels welcher ein erstes Bedienelement des Armlehnenelements indirekt bedienbar ist, wobei durch die Übertragungseinrichtung eine Bewegung eines zweiten Bedienelements des Zusatzmoduls auf das erste Bedienelement des Armlehnenelements übertragbar ist, wobei durch die Übertragungseinrichtung das erste Bedienelement und das zweite Bedienelement mechanisch koppelbar sind. Unter einer Übertragung der Bewegung kann vorzugsweise eine Übertragung einer Kraft und/oder eines Drehmoments und/oder einer (Winkel-)Geschwindigkeit und/oder ähnlicher geeigneter physikalischer Größen von dem ersten Bedienelement zu dem zweiten Bedienelement verstanden werden.

Durch ein solches erfindungsgemäßes Zusatzmodul muss die Herstellung des Armlehnenelements nicht verändert werden. An dem Armlehnenelement kann dann je nach Kundenwunsch ein entsprechendes Zusatzmodul angebracht werden. Das Zusatzmodal kann auch zu einem späteren Zeitpunkt wieder ausgetauscht werden, um das Armlehnenelement an eventuell geänderte Anforderungen anzupassen. Demnach können auch bereits bestehende Armlehnenelemente mit einem Zusatzmodul nachgerüstet werden. Auch die Produktion von Armlehnenelementen kann vereinfacht werden. Es kann beispielweise eine Grundausführung produziert werden, welche dann mit einem entsprechend der Kundenwünsche ausgebildeten Zusatzmodul versehen wird. Es wird somit eine modular ausgestaltete Armlehnenanordnung mit einem Armlehnenelement zur Verfügung gestellt. Das Armlehnenelement ist vorzugsweise um eine Schwenkachse (S) schwenkbar relativ zu dem Fahrzeugsitz. Unter einer solchen Verschwenkung wird in der Regel die Neigung die Armlehnenelements verstanden. Vorzugsweise dient das erste Bedienelement zur Einstellung der Neigung des Armlehnenelements und umfasst ein Antriebselement. Bevorzugt ist ein solches Antriebselement mit einem Neigungsverstellungsmechanismus wirkverbunden. Erfindungsgemäß ist das erste Bedienelement händisch durch den Nutzer bedienbar. Durch die Anordnung des Zusatzmoduls ist der Zugang zu dem ersten Bedienelement erschwert oder gar unmöglich. Hierzu ist das Zusatzmodul mit einem zweiten Bedienelement ausgestattet, welches vorteilhafterweise durch den Nutzer händisch bedienbar ist. Eine entsprechende Bewegung des zweiten Bedienelements wird durch die Übertragungseinrichtung auf das erste Bedienelement übertragen. Selbstverständlich kann ein Zusatzmodul sowohl für ein Armlehnenelement an einer rechten Seite des Sitzes als auch für ein Armlehnenelement an einer linken Seite des Sitzes verwendet werden.

Vorzugsweise ist die mechanische Kopplung beziehungsweise die Übertragung kraft- und/oder formschlüssig. Durch eine solche kraft- und/oder formschlüssige Kopplung beziehungsweise Übertragung wird eine indirekte Bedienung des ersten Bedienelements ermöglicht. Nach einer bevorzugten Ausführungsform umfasst das zweite Bedienelement ein zweites Kopplungselement, welches mit einem ersten Kopplungselement des ersten Bedienelements direkt oder indirekt kraft-und/ oder formschlüssig gekoppelt ist. Dabei ist unter einer direkten Kopplung zu verstehen, dass die beiden Kopplungseelement derart gekoppelt sind ohne dass weitere Kopplungselement vorgesehen sind. Demzufolge ist unter einer indirekten Kopplung zu verstehen, dass zur (Kraft-)Übertragung zwischen dem ersten und dem zweiten Kopplungselement noch weitere Kopplungselemente vorgesehen sind. Vorzugsweise weisen das erste Kopplungselement und das zweite Kopplungselement eine Stirnverzahnung auf. Bevorzugt ist die Stirnverzahnung des ersten Kopplungselements direkt oder indirekt mit der Stirnverzahnung des zweiten Kopplungselements gekoppelt. Auch hier ist unter einer indirekten Kopplung zu verstehen, dass weitere Kopplungselement zur Kraftübertragung zwischengeschaltet sind. Vorzugsweise ist das erste Kopplungselement als ein mit einer Stirnverzahnung versehenes erstes Zahnrad und das zweite Kopplungselement als ein mit einer Stirnverzahnung versehenes zweites Zahnrad ausgestaltet. Vorzugsweise kämmt das erste Zahnrad beziehungsweise dessen Verzahnung mit dem weiten Zahnrad beziehungsweise dessen Verzahnung. Denkbar wäre auch, dass noch weitere Zahnräder zwischen das erste und das zweite Zahnrad zwischengeschaltet sind, wodurch eine Getriebeanordnung realisiert wird.

Denkbar wäre auch, dass die Übertragung der Bewegung (Kraft, Drehmoment, (Winkel-)Geschwindigkeit etc.) durch eine Riemenanordnung erfolgt. Diese Riemenanordnung könnte vorzugsweise eine kraftschlüssige Übertragung zwischen einem entsprechend dazu geeigneten und dazu bestimmten ersten Kopplungselement und einem entsprechend dazu geeigneten und dazu bestimmten zweiten Kopplungselement bereitstellen. Nach einer weiteren vorteilhaften Ausführungsform könnte die Riemenanordnung eine formschlüssige und somit schlupffreie Übertragung zwischen einem entsprechend dazu geeigneten und dazu bestimmten ersten Kopplungselement und einem entsprechend dazu geeigneten und dazu bestimmten zweiten Kopplungselement bereitstellen. Hierzu könnte beispielsweise ein Zahnriemen verwendet werden. Denkbar sind auch weitere Zugmittelantriebe wie beispielsweise Kettenantriebe, mittel welcher die Kraftübertragung zwischen einem entsprechend dazu geeigneten und dazu bestimmten ersten Kopplungselement und einem entsprechend dazu geeigneten und dazu bestimmten zweiten Kopplungselement bereitstellen. Denkbar wäre auch eine Kraftübertragung mittels eines Wälzkörpergetriebe, Schneckengetriebe oder Planetengetriebe zwischen einem entsprechend dazu geeigneten und dazu bestimmten ersten Kopplungselement und einem entsprechend dazu geeigneten und dazu bestimmten zweiten Kopplungselement. Denkbar wären auch entsprechend geeignete kraftschlüssige, beispielsweise reibschlüssige Verbindungen.

Nach einer weiteren vorteilhaften Ausführungsform wird durch die Übertragungseinrichtung eine Drehmomentsteigerung oder eine (Winkel-) Geschwindigkeitssteigerung des ersten Bedienelement (5) bewirkt. Vorzugsweise ist zwischen dem zweiten Kopplungselement und dem ersten Kopplungselement ein Übersetzungsverhältnis gewählt, so dass das auf das erste Kopplungselement übertragene Drehmoment oder die auf das erste Kopplungselement übertragene (Winkel-) Geschwindigkeit vergrößert ist. Das Übersetzungsverhältnis (i) kann verschiedene Beziehungen zwischen einem antreibenden Konstruktionselement (Antrieb), vorliegend das zweite Kopplungselement und dem angetriebenen Konstruktionselement (Abtrieb), vorliegend das erste Kopplungselement berechnet werden: Bei Riemengetrieben über den wirksamen Durchmesser (d) der Riemenscheiben: $i = d_{Antrieb} / d_{Antrieb}$. Bei Zahnrad-, Zahnriemen- und Kettengetrieben über die Anzahl (z) der Zähne der Getrieberäder: $i = z_{Antrieb} / z_{Antrieb}$. Unter Vernachlässigung von Verlusten gilt für das übertragene Drehmoment (M): $i = M_{Abtrieb} / M_{Antrieb}$. Daraus folgt:

$$i = \frac{d_{Abtrieb}}{d_{Antrieb}} ; i = \frac{z_{Abtrieb}}{z_{Antrieb}}$$

$M_{Abtrieb} = M_{antrieb} * i$;

Für i > 1 wird demnach das übertragene Dreh-moment vergrößert. Man spricht auch von einer Untersetzung. Dies hat den Vorteil, dass der Nutzer die Neigungseinstellung des Armlehnenelements wesentlich leichter, das heißt mit einem geringeren Kraftaufwand durchführen kann. Umgekehrt zu den Drehmomenten verhalten sich die Drehzahlen n der Getrieberäder beziehungsweise deren Winkelgeschwindigkeiten $\omega$. Sie sind umso niedriger, je höher das Drehmoment ist. Daraus folgt: $\omega_{Abtrieb} =$

$$i = \frac{d_{Abtrieb}}{d_{Antrieb}} ; i = \frac{z_{Abtrieb}}{z_{Antrieb}}$$

$\omega_{Antrieb} * 1/i$; . Für i < 1 wird demnach die übertragene Winkelgeschwindigkeit beziehungsweise Drehzahl erhöht. Dies kann vorteilhaft sein, wenn das erste Bedienelement derart ausgelegt ist, dass eine Vielzahl von Umdrehungen notwendig ist um eine merkliche Änderung der Neigung zu bewirken.

Nach einer weiteren vorteilhaften Ausführungsform ist das Zusatzmodul mittels einer kraft-und/oder formschlüssigen Verbindung an dem Armlehnenelement anordenbar. Denkbar ist beispielsweise die Verwendung einer Schraubverbindung, einer Schnapp- oder Clipsverbindung, eine Steckverbindung oder einer sonstigen ähnlichen Verbindung. Erfindungsgemäß weist das Zusatzmodul einen schalenartig ausgebildeten Grundkörper auf. Dabei weist der Grundkörper eine Öffnungsfläche auf, welche derart ausgestaltet ist, dass der Grundkörper an einer Unterseite des Armlehnenelements anliegen kann. Vorzugsweise ragt das Armlehnenelement abschnittsweise in die Öffnungsfläche hinein. Weiterhin ist es von Vorteil, dass der Grundkörper im Wesentlichen rechteckförmig ausgebildet ist. Vorzugsweise umfasst der Grundkörper eine Basiswandung. Vorteilhafterweise ist die Basiswandung der Öffnungsfläche gegenüberliegend. Bevorzugt umfasst der Grundkörper weiterhin zwei längliche Seitenwandungen und eine vordere Stirnwandung. Vorzugsweise sind die länglichen Seitenwandungen und die vordere Stirnwandung an der Basiswandung angeordnet.

Nach einer weiteren bevorzugten Ausführungsform ist das zweite Bedienelement drehbar in dem Grundkörper gelagert. Vorzugsweise ist das zweite Bedienelement zylindrisch, bevorzugt mit einem kreisförmigen Querschnitt ausgebildet. Vorzugsweise kann das zweite Bedienelement rad- oder walzenförmig ausgebildet sein. Bevorzugt ist das zweite Bedienelement mittels einer Lagerungswelle an zumindest einem Lagerungselement, bevorzugt zwei Lagerungselementen des Grundkörpers drehbar angeordnet. Erfindungsgemäß weist der Grundkörper eine erste Öffnung auf, in welcher das zweite Bedienelement angeordnet ist und/oder zumindest abschnittsweise hineinragt. Bevorzugt ist die erste Öffnung in der Basiswandung vorgesehen. Der Nutzer kann demnach durch die erste Öffnung das zweite Bedienelement bedienen, beziehungsweise bewegen und indirekt das erste Bedienelement.

Nach einer weiteren bevorzugten Ausführungsform weist das Zusatzmodul ein erstes Erweiterungsmodul auf. Bevorzugt ist das erste Erweiterungsmodul an dem Grundköper anordenbar. Vorteilhafterweise ist das erste Erweiterungsmodul ein Bedienelement und/oder ein Anzeigeelement und/oder ein Aufbewahrungselement. Ein denkbares Bedienelement ist beispielsweise ein Joystick, ein Lenkrad (Mini-steering-wheel), eine Tast- oder Schalteinheit, eine Frontladerbedieneinheit und Ähnliches. Es können vorteilhafterweise Funktionen betreffend den Sitz, Funktionen betreffend das Fahrzeug oder sonstige Gerätefunktionen bedient werden. Auch Funktionen, von Kommunikationsmitteln oder Kommunikationsgeräten könnten vorteilhafterweise bedient werden. Ein Anzeigeelement ist beispielsweise ein Display, ein Touchscreen, (Warn-) Leuchten, LEDs oder Ähnliches. Ein Aufbewahrungselement ist beispielsweise ein Cupholder, schalenartig ausgebildete Elemente oder Ähnliches. Alternativ kann das erste Erweiterungsmodul eine Abdeckeinrichtung sein. Bevorzugt ist das erste Erweiterungsmodul an der vorderen Stirnwandung des Grundkörpers anordenbar. Das erste Erweiterungsmodul kann demnach über eine Längserstreckung des Armelehnenelements hinausragen.

Nach einer weiteren bevorzugten Ausführungsform weist der Grundkörper eine zweite Öffnung auf. Vorzugsweise weist die vordere Stirnwandung die zweite Öffnung auf. Bevorzugt ist ein Befestigungsvorsprung des ersten Erweiterungsmoduls in die zweite Öffnung einführbar, beziehungsweise durch die zweite Öffnung durchführbar. Vorzugsweise sind die zweite Öffnung und der Befestigungsvorsprung komplementär ausgebildet. Vorzugsweise umfasst der Befestigungsvorsprung zumindest eine Aufnahme, in welcher ein Sicherungselement anordenbar ist. Bevorzugt ragt der Befestigungsvorsprung durch die zweite Öffnung in den Grundkörper hinein, dabei ist das Sicherungselement in der zumindest einen Aufnahme eingeführt. Das Sicherungselement liegt an einer Innenfläche der Stirnwandung, so dass das erste Erweiterungsmodul gegen ein Herausziehen gesichert ist. Vorzugsweise ist das Sicherungselement ein Ü-förmig ausgebildetes Element, bevorzugt ein Federelement. Vorzugsweise greifen die beiden Schenkel des U-förmigen Elements in je eine als Nut ausgebildeten Aufnahme ein. Das erste Erweiterungsmodul ist somit vorteilhafterweise mittels einer lösbaren Verbindung an dem Grundkörper angeordnet. Das erste Erweiterungsmodul kann demnach bei Bedarf in einer sehr einfachen Art und Weise ausgetauscht werden.

Nach einer weiteren bevorzugten Ausführungsform weist das Zusatzmodul ein zweites Erweiterungsmodul auf. Bevorzugt ist das zweite Erweiterungsmodul an dem Grundköper anordenbar. Vorteilhafterweise ist das zweite Erweiterungsmodul ein Bedienelement und/oder ein Anzeigeelement und/oder ein Aufbewahrungselement. Ein denkbares Bedienelement ist beispielsweise ein Joystick, ein Lenkrad (Mini-steering-wheel), eine Tast- oder Schalteinheit, eine Frontladerbedieneinheit und Ähnliches. Es können vorteilhafterweise Funktionen betreffend den Sitz, Funktionen betreffend das Fahrzeug oder sonstige Gerätefunktionen bedient werden. Auch Funktionen, von Kommunikationsmitteln oder Kommunikationsgeräten könnten vorteilhafterweise bedient werden. Eine Anzeigeelement ist beispielsweise ein Display, ein Touchscreen, (Warn-)Leuchten, LEDs oder Ähnliches. Ein Aufbewahrungselement ist beispielsweise ein Cupholder, ein schalenartiges Element oder Ähnliches. Das zweite Erweiterungsmodul ist vorzugsweise an einer Seitenwandung des Grundkörpers anordenbar. Vorzugsweise kann das zweite Erweiterungsmodul über eine Breitenerstreckung des Armelehnenelements hinausragen. Bevorzugt ist das zweite Erweiterungsmodul mittels einer kraft- und/oder formschlüssigen Verbindung an der Seitenwandung des Grundkörpers angeordnet. Eines solche Verbindung kann beispielsweise eine Schraubverbindung eine Schnapp- oder Clipsverbindung eine Steckverbindung oder eine sonstige ähnliche Verbindung sein.

Die vorliegende Aufgabe wird auch von einer Armlehnenanordnung für einen Sitz, insbesondere für einen Fahrzeugsitz gelöst. Die Armlehnenanordnung umfasst ein Armlehnenelement, an welchem ein Zusatzmodul nach einem der vorhergehenden Ausführungsformen angeordnet ist. Die Armlehnenanordnung kann dabei mit allen bereits obig im Rahmen des Zusatzmoduls beschriebenen Merkmalen einzeln oder in Kombination miteinander ausgestattet sein und umgekehrt. Nach einer weiteren bevorzugten Ausführungsform ist das Armlehnenelement mittels einer Lagerachse mit einem Armlehnenträger schwenkbeweglich verbunden. Bevorzugt ist eine Verstelleinrichtung zur Einstellung eines Neigungswinkels zwischen dem Armlehnenelement und dem Armlehnenträger vorgesehen. Vorzugsweise umfasst die Verstelleinrichtung das erste Bedienelement. Bevorzugt ist das erste Bedienelement zumindest abschnittsweise innerhalb eines Gehäuses des Armlehnenelements um seine Längsachse (L) drehbar gelagert. Bevorzugt ist das erste Bedienelement mit einem Neigungsverstellmechanismus wirkverbunden.

Die vorliegende Aufgabe wird auch von einem Fahrzeugsitz mit einer Armlehnenanordnung nach einem der vorhergehend beschriebenen Ausführungsformen gelöst. Der Fahrzeugsitz kann dabei mit allen bereits obig im Rahmen des Zusatzmoduls und der Armlehnenanordnung beschriebenen Merkmalen einzeln oder in Kombination miteinander ausgestattet sein und umgekehrt.

Weitere Vorteile, Ziele und Eigenschaften der vorliegenden Erfindung werden anhand nachfolgender Beschreibung der anliegenden Figuren erläutert. Gleichartige Komponenten können in den verschiedenen Ausführungsformen gleiche Bezugszeichen aufweisen.

In den Figuren zeigen:

Fig. 1     eine Draufsicht auf ein Armlehnenelement nach einer Ausführungsform;

Fig. 2     eine Schnittansicht eines Armlehnenelements entsprechend der Schnittlinie C-C;

Fig. 3     eine Schnittansicht eines Armlehnenelements entsprechend der Schnittlinie D-D;

Fig. 4     eine Explosionsdarstellung einer Armlehnenanordnung nach einer Ausführungsform;

Fig. 5     eine Draufsicht auf ein Armlehnenelement nach einer Ausführungsform;

Fig. 6     eine Schnittansicht eines Armlehnenelements entsprechend der Schnittlinie A-A;

Fig. 7     eine Schnittansicht eines Armlehnenelements entsprechend der Schnittlinie B-B;

Fig. 8     eine perspektivische Ansicht eines Zusatzmoduls nach einer Ausführungsform;

Fig. 9     eine perspektivische Ansicht eines Zusatzmoduls nach einer Ausführungsform;

Fig. 10     eine perspektivische Ansicht eines Zusatzmoduls nach einer weiteren Ausführungsform;

Fig. 11     eine perspektivische Ansicht eines Zusatzmoduls nach einer weiteren Ausführungsform;

Fig. 12     eine perspektivische Ansicht einer Armlehnenanordnung nach einer weiteren Ausführungsform;

Fig. 13     eine perspektivische Ansicht einer Armlehnenanordnung nach einer weiteren Ausführungsform;

Fig. 14     eine perspektivische Ansicht einer Armlehnenanordnung nach einer weiteren Ausführungsform;

Fig. 15     eine perspektivische Ansicht einer Armlehnenanordnung nach einer weiteren Ausführungsform;

Fig. 16     eine perspektivische Ansicht einer Armlehnenanordnung nach einer weiteren Ausführungsform;

Fig. 17     einen Fahrzeugsitz mit einer Armlehnenanordnung.

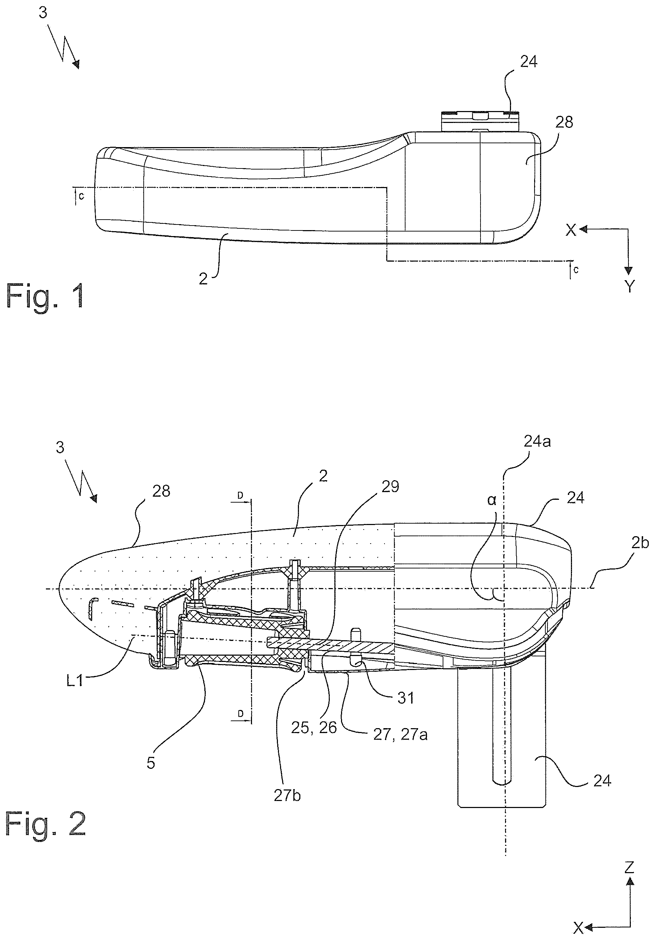

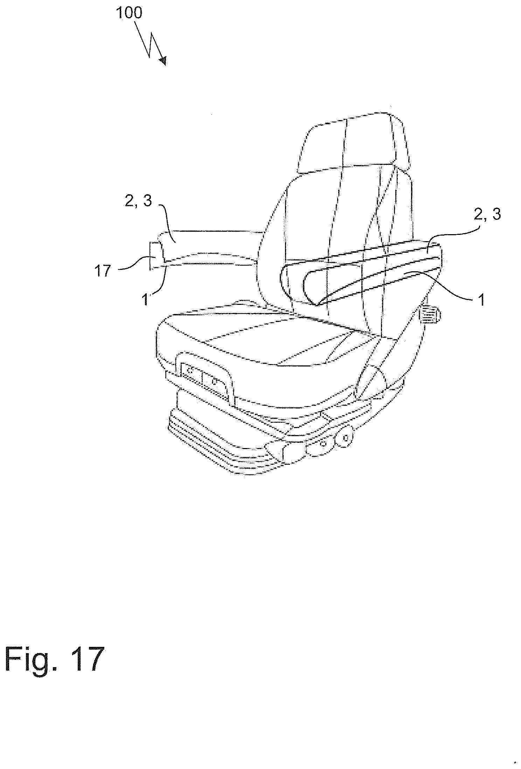

In den Figuren 1 bis 17 ist ein Zusatzmodul 1 für ein Armlehnenelement 2 eines Sitzes insbesondere eines Fahrzeugsitzes 100 dargestellt, wobei das Zusatzmodul 1 an dem Armlehnenelement 2 anordenbar ist, wobei in dem Zusatzmodul 1 eine Übertragungseinrichtung 4 vorgesehen ist, mittels welcher ein erstes Bedienelement 5 des Armlehnenelements 2 indirekt bedienbar ist, wobei die Übertragungseinrichtung 4 eine Bewegung eines zweiten Bedienelements 6 des Zusatzmoduls 1 auf das erste Bedienelement 5 des Armlehnenelements 2 übertragbar ist, wobei durch die Übertragungseinrichtung 4 das erste Bedienelement 5 und das zweite Bedienelement 6 mechanisch gekoppelt sind.

Ferner ist in den Figuren 1 bis 7 und 12 bis 16 eine Armlehnenanordnung (3) für einen Sitz, insbesondere für einen Fahrzeugsitz (100) mit einem Armlehnenelement (2), an welchem ein Zusatzmodul (1) angeordnet ist, dargestellt. Das Zusatzelement (1) und das Armlehnenelement 2 erstrecken sich entlang eine Höhenachse Z einer Längsachse X und einer Breitenachse Y.

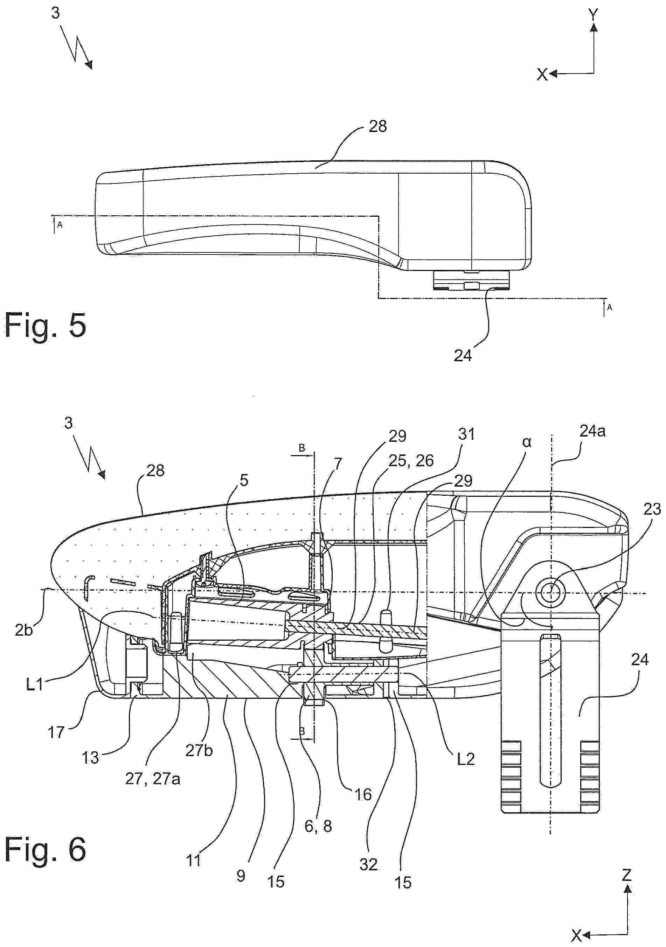

Das Armlehnenelement 2 umfasst einen Polsteraufsatz 28, welcher auf einem Gehäuse 27 angeordnet ist. Das Armlehnenelement 2, beziehungsweise das Gehäuse 27 ist mittels einer Lagerachse 23 mit einem Armlehnenträger 24 schwenkbeweglich verbunden. Zwischen dem Armlehnenelement (2) und dem Armlehnenträger (24), beziehungsweise zwischen diesen Elementen zugeordneten Mittelachsen 2b, 24a kann ein Neigungswinkel α definiert werden. Dies ist beispielsweise in den Figuren 2 und 6 ersichtlich. Es ist eine Verstelleinrichtung 25 zur Einstellung eines Neigungswinkels α zwischen dem Armlehnenelement 2 und dem Armlehnenträger 24 vorgesehen. Die Verstelleinrichtung 25 umfasst das erste Bedienelement 5. Das erste Bedienelement 5 ist zumindest abschnittsweise innerhalb eines Gehäuses 27 des Armlehnenelements 2 um sein Längsachse $L_1$ drehbar gelagert und mit einem Neigungsverstellmechanismus 26 wirkverbunden. Das Gehäuse 27 umfasst an einer entlang der Höhenachse Z unteren Seite 27a eine Öffnung 27b, in welcher das erste Bedienelement 5 zumindest abschnittsweise angeordnet ist und zugänglich ist. Ist an dem Armlehnenelement 2 kein Zusatzmodul1 angeordnet, kann das erste Bedienelement mittels der Öffnung 27b von einem Nutzer händisch betätigt werden.

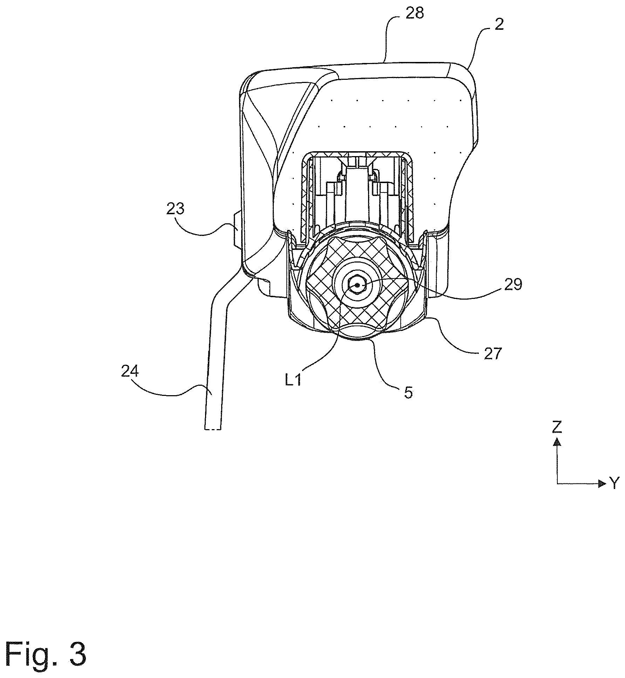

In den Figuren 2 bis 7 ist Verstelleinrichtung 25, beziehungsweise der Neigungsverstellmechanismus 26 erkennbar. Figur 2 ist eine Schnittansicht gemäß den Schnittlinien C-C in Figur 1. Figur 3 ist eine Schnittansicht gemäß den Schnittlinien D-D in Figur 2. Figur 6 ist eine Schnittansicht gemäß den Schnittlinien A-A in Figur 5.

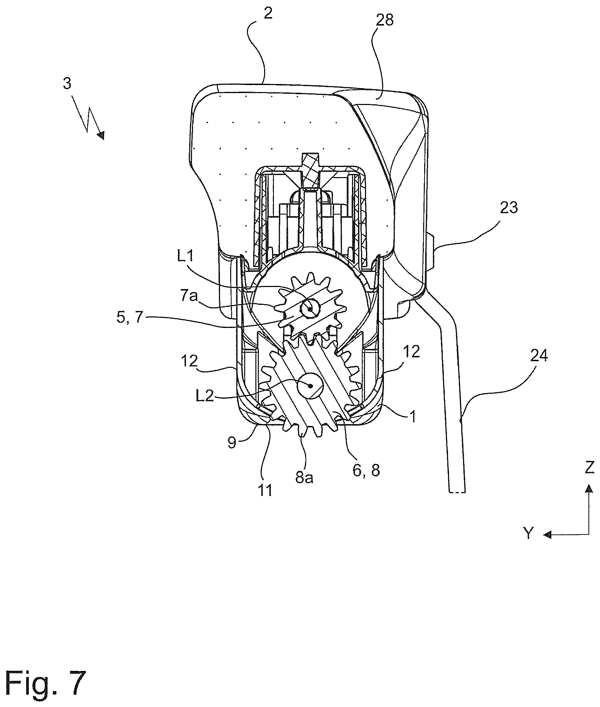

Figur 7 ist eine Schnittansicht gemäß den Schnittlinien B-B in Figur 6. In den Figuren 2 und 3 ist dabei ein Armlehnenelement ohne das Zusatzmodul 1 dargestellt. In den Figuren 6 und 7 ist an dem Armlehnenelement eine Zusatzmodul vorgesehen. Die Verstelleinrichtung 25, beziehungsweise der Neigungsverstellmechanismus 26 umfasst eine Drehspindel 29, an dessen ersten Ende das erste Bedienelement 5 angeordnet ist. Die Drehspindel 29 ist mit ihrem zweiten Ende mit einem Abstützelement 30, das drehfest an dem Armlehnenträger 24 befestigt ist, mechanisch in Eingriff gebracht, wobei zur Einstellung des Neigungswinkels α die Drehspindel 29 über eine Drehbewegung des ersten Bedienelements gegen das Abstützelement 30 bewegbar ist. Ferner ist ein Lagerungselement 31 für die Drehspindel 29 vorgesehen. Die Erfindung ist jedoch nicht auf einen derartig ausgestalteten Neigungsverstellmechanismus 26 beschränkt.

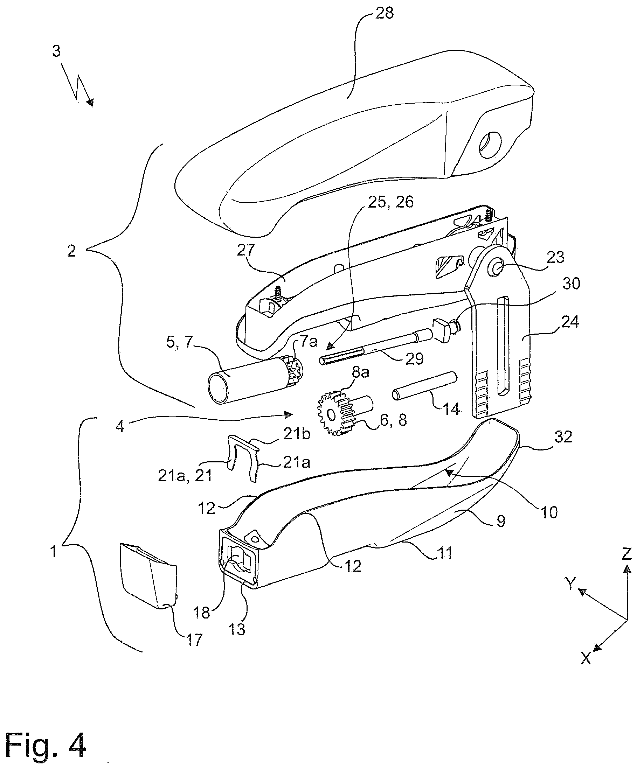

Das Zusatzmodul 1 ist in den Figuren 4 bis 17 dargestellt und kann sowohl für ein Armelehnenelement 2, welches an der linken Seite des Fahrzeugsitzes anordenbar ist (siehe beispielsweise Figuren 1 bis 3) als auch für ein Armlehnenelement 2, welches an der rechten Seite des Fahrzeugsitzes 100 anordenbar ist (siehe beispielsweise Figuren 5 bis 7). Die mechanische Kopplung kann kraft- und/oder formschlüssig sein. Vorliegend wird eine Formschlüssige Kopplung dargestellt, wobei die Erfindung nicht auf eine derartige Kopplung beschränkt sein soll. Das zweite Bedienelement 6 umfasst ein zweites Kopplungselement 8, welches mit einem ersten Kopplungselement 7 des ersten Bedienelements 5 direkt formschlüssig gekoppelt ist. Das erste Kopplungselement 7 und das zweite Kopplungselement 8 weisen eine Stirnverzahnung 7a, 8a auf, wobei die beiden Stirnverzahnungen 7a, 8a kämmen. Vorliegend sind das zweite Bedienelement 6 und das zweite Kopplungselement 8 als ein Element, beziehungsweise Zahnrad ausgebildet. Das erste Koppelement 7 ist ein Zahnmodul mit der Stirnverzahnung 7a, welches in dem ersten Bedienelement 5 integriert ist. Das Kämmen der Stirnverzahnungen 7a, 8a des ersten Kopplungselements 7 und des zweiten Kopplungselements 8 ist in den Figuren 6 bis 9 gut ersichtlich.

Durch die Übertragungseinrichtung 4 kann eine Drehmomentsteigerung oder eine Winkelgeschwindigkeitssteigerung des ersten Bedienelement 5 bewirkt werden. Hierzu kann das Übersetzungsverhältnis i zwischen dem zweiten Kopplungselement 8 und dem ersten Kopplungselement 7 so gewählt werden, dass Drehmoment oder die Winkelgeschwindigkeit des ersten Kopplungselements gesteigert sind. In Figur 7 ist beispielsweise eine Steigerung der Winkelgeschwindigkeit. Es bespielhaft i= 12/18 = 0,67, wodurch $\omega_{Abtrieb} = \omega_{Anrieb} * 1,5$.

Das Zusatzmodul 1 weist einen schalenartig ausgebildeten Grundkörper 9 auf. Der Grundkörper 9 weist wiederum eine Öffnungsfläche 10 auf, welche derart ausgestaltet ist, dass der Grundkörper 9 an einer Unterseite 2a des Armlehnenelements 2 anliegen kann.

Das Armelement 2 kann dabei auch abschnittsweise in die Öffnungsfläche 10 hineinragen. Der Grundkörper 9 ist im Wesentlichen rechteckförmig ausgebildet und umfasst eine Basiswandung 11, welche der Öffnungsfläche 10 gegenüberliegend ist, zwei Seitenwandungen 12, eine vordere Stirnwandung 13 und eine hintere Stirnwandung 33. Die zwei Seitenwandungen 12, und die beiden Stirnwandungen 13, 32 umranden dabei die Öffnungsfläche 10. Eine obere Berandung der beiden Seitenwandungen 12 ist dabei derart ausgestaltet, dass der Grundkörper 9 an die entsprechenden Konturen des Armlehnenelements 2 angepasst ist. Vorliegend sind die oberen Berandungen der beiden Seitenwandungen 12 geschwungen, beziehungsweise im Wesentlichen S-förmig ausgestaltet. Die vordere Stirnwandung 13 ist im Wesentlichen parallel zu der Höhenachse Z ausgerichtet, die hintere Stirnwandung 32 geneigt zu der Höhenachse Z ausgerichtet. Das Zusatzmodul 1 ist mittels einer kraft- und/oder formschlüssigen Verbindung an dem Armlehnenelement 2 anordenbar. Vorliegend sind beispielsweise die Öffnungen 32 in dem Grundkörper vorgesehen, durch welche eine Schraube geführt werden kann. Das zweite Bedienelement 6 ist um eine Längsachse $L_2$ drehbar in dem Grundkörper 9 gelagert. Das zweite Bedienelement 6 ist kreiszylindrisch in Form eines Zahnrades ausgebildet. Dabei ist das zweite Bedienelement 6 mittels einer Lagerungswelle 14 an zumindest einem, bevorzugt zwei Lagerungselementen 15 des Grundkörpers 9 drehbar angeordnet. Die Lagerungswelle 14 erstreckt sich dabei durch ein Hülsenelement 33 des zweiten Bedienelements 6, beziehungsweise des zweiten Kopplungselements 8. Der Grundkörper 9 weist eine erste Öffnung 16 auf, in welcher das zweite Bedienelement 6 angeordnet ist und/oder zumindest abschnittsweise hineinragt. Durch diese erste Öffnung 16 kann der Nutzer das zweite Bedienelement 6, beziehungsweise das zweite Kopplungselement 8 betätigen und somit indirekt das erste Bedienelement 6 betätigen.

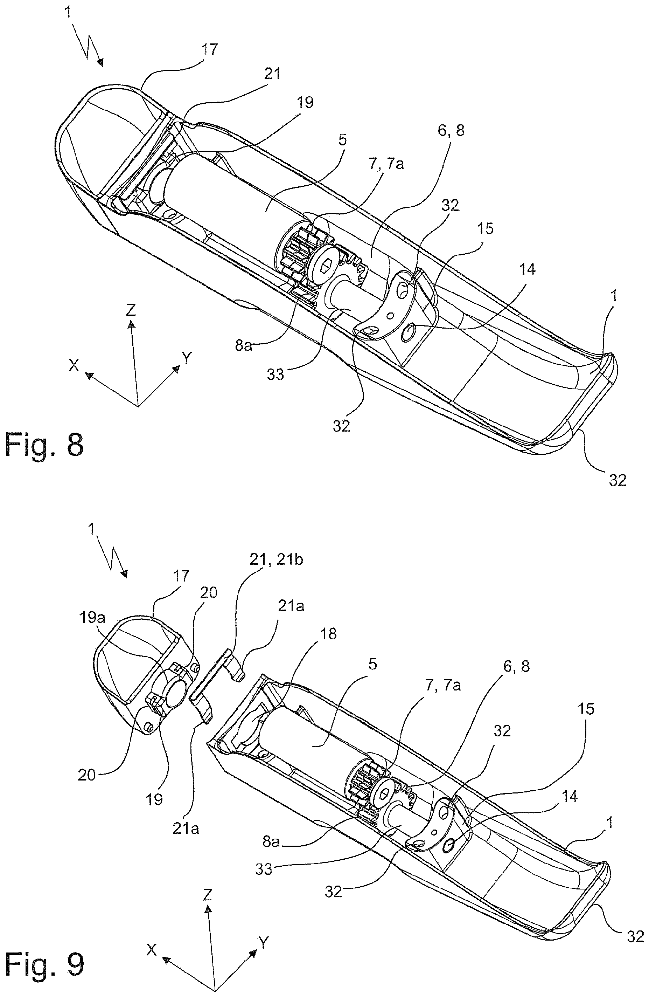

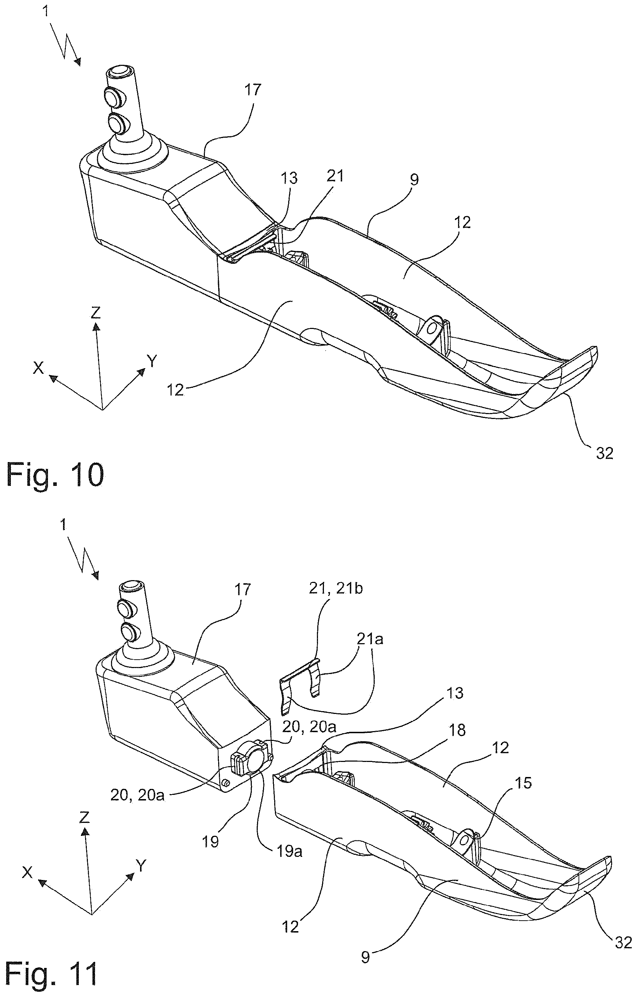

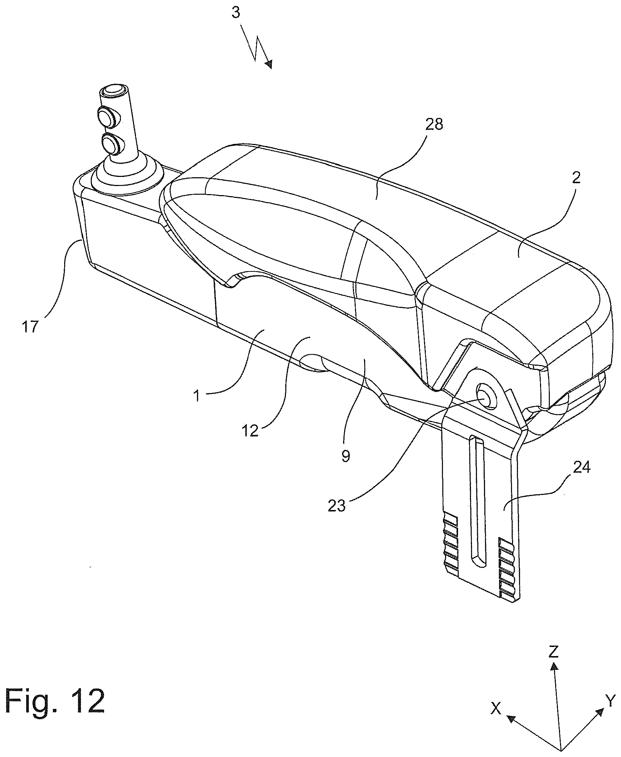

Das Zusatzmodul 1 weist ein erstes Erweiterungsmodul 17 auf, welches an dem Grundköper 9 anordenbar ist. Nach der Ausführungsform gemäß den Figuren 8 und 9 ist das erste Erweiterungsmodul 17 ein becherartiges Aufbewahrungselement. Nach den Ausführungsformen gemäß den Figuren 10 bis 14 erste Erweiterungsmodul 17 ein Bedienelement in Form eines Joysticks. Nach den Ausführungsformen gemäß den Figuren 4 und 15 bis 16 ist das Erweiterungsmodul 17 eine Abdeckeinrichtung in Form eines Verkleidungselements. Selbstverständlich kann das erste Erweiterungsmodul 17 noch beliebig anderweitig ausgestattet werden, in Form von Bedienelementen und/oder ein Anzeigeelementen und/oder Aufbewahrungselementen. Das erste Erweiterungsmodul 17 ist dabei an der vorderen Stirnwandung 13 des Grundkörpers 9 angeordnet, so dass das erste Erweiterungsmodul 17 über eine Längserstreckung entlang der Längsachse X des Armlehnenelements 2 hinausragt. Hierzu weist der Grundkörper, beziehungsweise die vordere Stirnwandung eine zweite Öffnung 18 auf, in welche ein Befestigungsvorsprung 19 des ersten Erweiterungsmoduls (17) einführbar, beziehungsweise durchführbar ist. Dabei sind die zweite Öffnung 18 und der Befestigungsvorsprung 19 komplementär ausgebildet. Wie in der Figur 9 gut zu erkennen ist, weist der Befestigungsvorsprung 19 einen stiftartigen Abschnitt 19a auf. Seitlich von dem stiftartigen Abschnitt 19a ist jeweils eine Aufnahme mit einer Nut 20a vorgesehen. Der Befestigungsvorsprung wird durch die zweite Öffnung 18 geführt, so dass die Aufnahmen 20, beziehungsweise die Nuten 20a sich in dem Grundkörper 9 befinden. In den Aufnahmen 20 ist dann ein Sicherungselement 21 anordenbar. Das Sicherungselement 21 kann U-förmig ausgestaltet sein wie beispielsweise in den Figuren 4 und 9 ersichtlich. Demnach umfasst das Sicherungselement zwei Schenkel 21a, welche jeweils in eine Nut 20a eingeschoben werden. Das Sicherungselement 21, beziehungsweise ein horizontaler Verbindungsabschnitt 21b liegen dann an einer Innenwand der vorderen Stirnwandung 13 an. Das Sicherungselement 21 ist vorzugsweise als Federblech ausgestaltet. Hierdurch ist das erste Erweiterungsmodul 17 gegen ein Herausziehen gesichert. Die Figuren 12 bis 14 zeigen eine Armlehnenanordnung 3 mit einem ersten Erweiterungsmodul 17 in Form eines Joysticks.

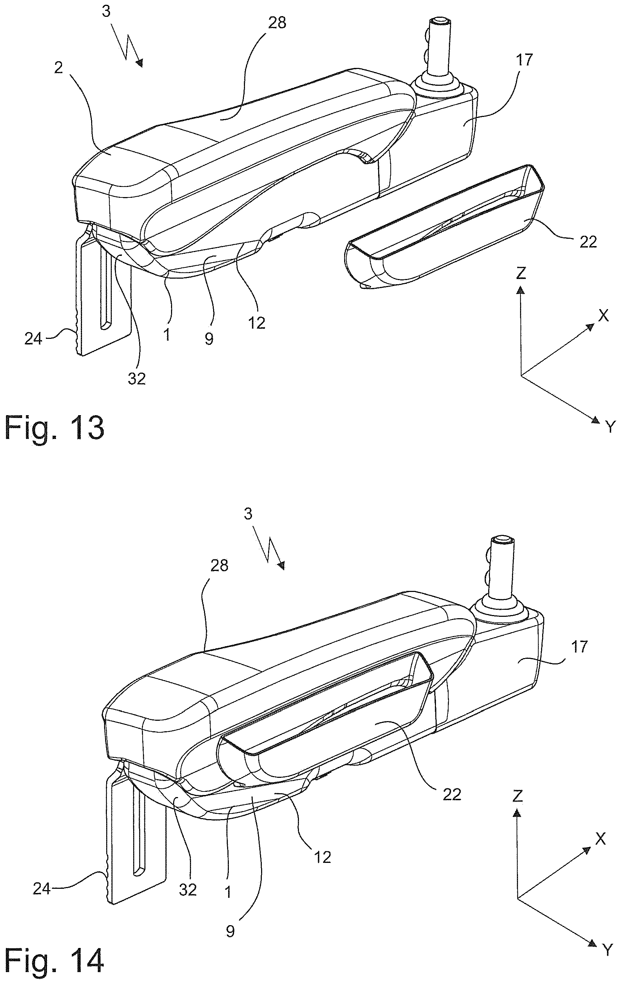

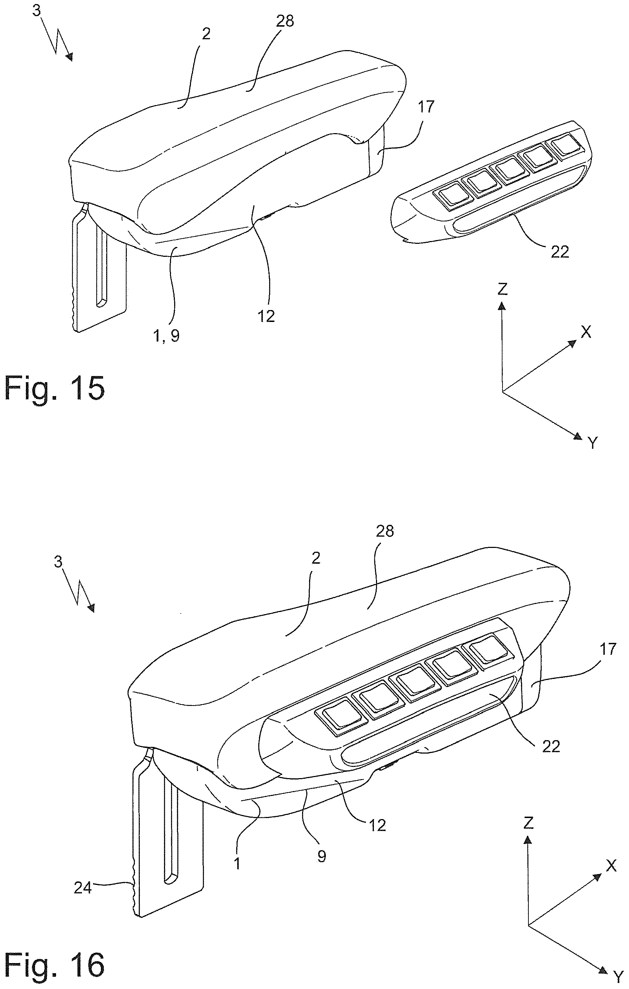

Wie aus den Figuren 14 bis 16 ersichtlich ist, kann das Zusatzmodul 1 ein zweites Erweiterungsmodul 22 aufweisen, welches an dem Grundköper 9 anordenbar ist, wobei das zweite Erweiterungsmodul 22 ein Bedienelement und/oder ein Anzeigeelement und/oder ein Aufbewahrungselement sein kann. Gemäß der Ausführungsform nach den Figuren 13 und 14 ist das zweiter Erweiterungsmodul 22 ein längliches schalenförmiges Aufbewahrungselement, beziehungsweise Staufach. Gemäß der Ausführungsform nach den Figuren 15 und 16 ist das zweiter Erweiterungsmodul 22 ein längliches Bedienelement, in Form einer Schalterleiste, welche eine Mehrzahl von Schaltern oder Tastern umfasst. Mittels dieser können vorzugsweise Sitzfunktionen Fahrzeugfunktionen oder sonstige Gerätefunktionen gesteuert werden. Das zweite Erweiterungsmodul 22 ist an einer Seitenwandung 12 des Grundkörpers 9 anordenbar, so dass das zweite Erweiterungsmodul 22 über eine Breitenerstreckung entlang der Breitenachse Y des Armelehenelements 2 hinausragt. Vorzugsweise wird diejenige Seitenwandung 12 gewählt, welche vom Sitzbereich weg gerichtet ist. Eine entsprechende Verbindung zwischen dem zweiten Erweiterungsmodul 22 und dem Grundkörper kann eine kraft- und oder formschlüssige Verbindung sein. Hier kommen beispielsweise Schraubverbindungen Steckverbindungen oder Schnappverbindungen in Betracht. Das zweite Erweiterungsmodul 22 sowie das erste Erweiterungsmodul 17 können beliebig an die Kundenwünsche angepasst werden. Durch den modularen Aufbau der Armlehnenanordnung 3, beziehungsweise des Zusatzmoduls 1 kann eine Umgestaltung dieser möglichst einfach erfolgen.

**Bezugszeichenliste**

| | |
|---|---|
| 1 | Zusatzmodul |
| 2 | Armlehnenelement |
| 2a | Unterseite des Armlehnenelements |
| 2b | Mittelachse des Armelements |
| 3 | Armlehnenanordnung |
| 4 | Übertragungseinrichtung |
| 5 | erstes Bedienelement |
| 6 | zweites Bedienelement |
| 7 | erstes Kopplungselement |
| 7a | Stirnverzahnung des ersten Kopplungselements |
| 8 | zweites Kopplungselement |
| 8a | Stirnverzahnung des zweiten Kopplungselements |
| 9 | Grundkörper |
| 10 | Öffnungsfläche des Grundkörpers |
| 11 | Basiswandung |
| 12 | Seitenwandungen |
| 13 | Stirnwandung |
| 14 | Lagerungswelle |
| 15 | Lagerungselement |
| 16 | erste Öffnung des Grundkörpers |
| 17 | erstes Erweiterungsmodul |
| 18 | zweite Öffnung des Grundkörpers |
| 19 | Befestigungsvorsprung |
| 19a | stiftartiger Abschnitt |
| 20 | Aufnahme |
| 20a | Nut der Aufnahme |
| 21 | Sicherungselement |
| 21a | Schenkel des Sicherungselements |
| 21b | Verbindungsabschnitt des Sicherungselements |
| 22 | zweites Erweiterungsmodul |
| 23 | Lagerachse |
| 24 | Armlehnenträger |
| 24a | Mittelachse des Armlehnenträgers |
| 25 | Verstelleinrichtung |
| 26 | Neigungsverstellmechanismus |
| 27 | Gehäuses des Armlehnenelements |
| 27a | unter Seite des Gehäuses |
| 27b | Öffnung des Gehäuses |
| 28 | Polsteraufsatz |
| 29 | Drehspindel |
| 30 | Abstützelement |
| 31 | Lagerungselement |
| 32 | Öffnungen |
| 33 | Hülsenelement |
| 100 | Fahrzeugsitz |
| α | Neigungswinkel |
| L1 | Längsachse des ersten Bedienelements |
| L2 | Längsachse des zweiten Bedienelements |
| X | Längsachse |
| Y | Breitenachse |
| Z | Höhenachse |

**Patentansprüche**

1. Zusatzmodul (1) für ein Armlehnenelement (2) eines Sitzes insbesondere eines Fahrzeugsitzes (100),

   wobei das Zusatzmodul (1) an dem Armlehnenelement (2) anordenbar ist, wobei in dem Zusatzmodul (1) eine Übertragungseinrichtung (4) vorgesehen ist, mittels welcher ein erstes Bedienelement (5) des Armlehnenelements (2) indirekt bedienbar ist, wobei die Übertragungseinrichtung (4) eine Bewegung eines zweiten Bedienelements (6) des Zusatzmoduls (1) auf das erste Bedienelement (5) des Armlehnenelements (2) übertragbar ist, wobei durch die Übertragungseinrichtung (4) das erste Bedienelement (5) und das zweite Bedienelement (6) mechanisch koppelbar sind, wobei das zweite Bedienelement (6) händisch bedienbar ist, **dadurch gekennzeichnet, dass** das Zusatzmodul (1) einen schalenartig ausgebildeten Grundkörper (9) aufweist, wobei der Grundkörper (9) eine Öffnungsfläche (10) aufweist, welche derart ausgestaltet ist, dass der Grundkörper (9) an einer Unterseite (2a) des Armlehnenelements (2) anliegen kann, wobei der Grundkörper (9) eine erste Öffnung (16) aufweist, in welcher das zweite Bedienelement (6) angeordnet ist und/oder zumindest abschnittsweise hineinragt, wobei durch diese erste Öffnung (16) ein Nutzer das zweite Bedienelement (6), betätigen kann.

2. Zusatzmodul (1) nach Anspruch 1, **dadurch gekennzeichnet, dass** die mechanische Kopplung kraft- und/oder formschlüssig ist, das zweite Bedienelement (6) ein zweites Kopplungselement (8) umfasst, welches mit einem ersten Kopplungselement (7) des ersten Bedienelements (5) direkt oder indirekt kraft- und/oder formschlüssig gekoppelt ist, wobei das erste Kopplungselement (7) und das zweite Kopplungselement (8) eine Stirnverzahnung (7a, 8a) aufweisen, wobei die Stirnverzahnung (7a) des ersten Kopplungselements (7) direkt oder indirekt mit der Stirnverzahnung (8a) des zweiten Kopplungselements (8) gekoppelt ist.

3. Zusatzmodul (1) nach Anspruch 2, **dadurch gekennzeichnet, dass** durch die Übertragungseinrichtung (4) eine Drehmomentsteigerung oder eine Winkelgeschwindigkeitssteigerung des ersten Bedienelement (5) bewirkt wird, wobei zwischen dem zweiten Kopplungselement (8) und dem ersten Kopplungselement (7) ein Übersetzungsverhältnis gewählt ist, so dass das auf das erste Kopplungselement (7) übertragene Drehmoment oder die auf das erste Kopplungselement übertragene Winkelgeschwindigkeit vergrößert ist.

4. Zusatzmodul (1) nach einem der vorhergehenden Ansprüche, **dadurch gekennzeichnet, dass** das Zusatzmodul (1) mittels einer kraft- und/oder formschlüssigen Verbindung an dem Armlehnenelement (2) anordenbar ist, wobei der Grundkörper (9) im Wesentlichen rechteckförmig ausgebildet ist, wobei der Grundkörper (9) eine Basiswandung (11), zwei längliche Seitenwandungen (12) und eine vordere Stirnwandung (13) umfasst.

5. Zusatzmodul (1) nach Anspruch 4, **dadurch gekennzeichnet, dass** das zweite Bedienelement (6) drehbar in dem Grundkörper (9) gelagert ist, wobei das zweite Bedienelement (6) zylindrisch ausgebildet ist, wobei das zweite Bedienelement (6) mittels einer Lagerungswelle (14) an zumindest einem Lagerungselement (15) des Grundkörpers (9) drehbar angeordnet ist.

6. Zusatzmodul (1) nach Anspruch 4, **dadurch gekennzeichnet, dass** das Zusatzmodul (1) ein erstes Erweiterungsmodul (17) aufweist, welches an dem Grundköper (9) anordenbar ist, wobei das erste Erweiterungsmodul (17) ein Bedienelement und/oder ein Anzeigeelement und/oder ein Aufbewahrungselement ist, wobei das erste Erweiterungsmodul (17) an der vorderen Stirnwandung (13) des Grundkörpers (9) anordenbar ist.

7. Zusatzmodul (1) nach Anspruch 5, **dadurch gekennzeichnet, dass** die vordere Stirnwandung (13) eine zweite Öffnung (18) aufweist, in welche ein Befestigungsvorsprung (19) des ersten Erweiterungsmoduls (17) einführbar ist, wobei die zweite Öffnung (18) und der Befestigungsvorsprung (19) komplementär ausgebildet sind, wobei der Befestigungsvorsprung (19) zumindest eine Aufnahme (20) umfasst, in welcher ein Sicherungselement (21) anordenbar ist.

8. Zusatzmodul (1) nach Anspruch 4, **dadurch gekennzeichnet, dass** das Zusatzmodul (1) ein zweites Erweiterungsmodul (22) aufweist, welches an dem Grundköper (9) anordenbar ist, wobei das zweite Erweiterungsmodul (22) ein Bedienelement und/oder ein Anzeigeelement und/oder ein Aufbewahrungselement ist, wobei das zweite Erweiterungsmodul (22) an einer Seitenwandung (12) des Grundkörpers (9) anordenbar ist.

9. Armlehnenanordnung (3) für einen Sitz, insbesondere für einen Fahrzeugsitz (100) mit einem Armlehnenelement (2), an welchem ein Zusatzmodul (1) nach einem der vorhergehenden Ansprüche angeordnet ist.

10. Armlehnenanordnung (3) nach Anspruch 9, **dadurch gekennzeichnet, dass** das Armlehnenelement (2) mittels einer Lagerachse (23) mit einem Armlehnenträger (24) schwenkbeweglich verbunden ist, wobei eine Verstelleinrichtung (25) zur Einstellung eines Neigungswinkels ($\alpha$) zwischen dem Armlehnenelement (2) und dem Armlehnenträger (24) vorgesehen ist, wobei die Verstelleinrichtung (25) das erste Bedienelement (5) umfasst, wobei das erste Bedienelement (5) zumindest abschnittsweise innerhalb eines Gehäuses (27) des Armlehnenelements (2) um seine Längsachse ($L_1$) drehbar gelagert ist und mit einem Neigungsverstellmechanismus (26) wirkverbunden ist.

11. Fahrzeugsitz (100) mit einer Armlehnenanordnung (3) nach einem der Ansprüche 9 bis 10.

## Claims

1. Add-on module (1) for an armrest element (2) of a seat, in particular a vehicle seat (100), wherein the add-on module (1) can be arranged on the armrest element (2), wherein a transmission device (4) is provided in the add-on module (1), by means of which a first operating element (5) of the armrest element (2) can be indirectly operated, wherein the transmission device (4) can transmit a movement of a second operating element (6) of the add-on module (1) to the first operating element (5) of the armrest element (2), wherein the first operating element (5) and the second operating element (6) can be mechanically coupled by the transmission device (4), wherein the second operating element (6) can be operated manually **characterised in that** the add-on module (1) has a shell-like base body (9), the base body (9) having an opening surface (10) which is designed such that the base body (9) can rest against an underside (2a) of the armrest element (2), the base body (9) having a first opening (16) in which the second operating element (6) is arranged and/or projects at least in sections, a user being able to actuate the second operating element (6) through this first opening (16).

2. Add-on module (1) according to claim 1, **characterised in that** the mechanical coupling is non-positive and/or positive, the second operating element (6) comprises a second coupling element (8) which is directly or indirectly coupled to a first coupling element (7) of the first operating element (5) in a non-positive and/or positive manner, wherein the first coupling element (7) and the second coupling element (8) have a face toothing (7a, 8a), wherein the face toothing (7a) of the first coupling element (7) is directly or indirectly coupled to the face toothing (8a) of the second coupling element (8).

3. Add-on module (1) according to claim 2, **characterised in that** an increase in torque or an increase in angular velocity of the first operating element (5) is brought about by the transmission device (4), wherein a transmission ratio is selected between the second coupling element (8) and the first coupling element (7), so that the torque transmitted to the first coupling element (7) or the angular velocity transmitted to the first coupling element is increased.

4. Add-on module (1) according to one of the preceding claims, **characterised in that** the add-on module (1) can be arranged on the armrest element (2) by means of a non-positive and/or positive connection, wherein the base body (9) is essentially rectangular in shape, wherein the base body (9) comprises a base wall (11), two elongated side walls (12) and a front end wall (13).

5. Add-on module (1) according to claim 4, **characterised in that** the second operating element (6) is rotatably mounted in the base body (9), wherein the second operating element (6) is of cylindrical design, wherein the second operating element (6) is rotatably arranged on at least one mounting element (15) of the base body (9) by means of a mounting shaft (14).

6. Add-on module (1) according to claim 4, **characterised in that** the add-on module (1) has a first extension module (17) which can be arranged on the base body (9), wherein the first extension module (17) is an operating element and/or a display element and/or a storage element, wherein the first extension module (17) can be arranged on the front end wall (13) of the base body (9).

7. Add-on module (1) according to claim 5, **characterised in that** the front end wall (13) has a second opening (18) into which a fastening projection (19) of the first extension module (17) can be inserted, wherein the second opening (18) and the fastening projection (19) are of complementary design, wherein the fastening projection (19) comprises at least one receptacle (20), in which a securing element (21) can be arranged.

8.  Add-on module (1) according to claim 4, **characterised in that** the add-on module (1) has a second extension module (22) which can be arranged on the base body (9), wherein the second extension module (22) is an operating element and/or a display element and/or a storage element, wherein the second extension module (22) can be arranged on a side wall (12) of the base body (9).

9.  Armrest arrangement (3) for a seat, in particular for a vehicle seat (100) with an armrest element (2), on which an add-on module (1) according to one of the preceding claims is arranged.

10. Armrest arrangement (3) according to claim 9, **characterised in that** the armrest element (2) is pivotably connected to an armrest support (24) by means of a bearing axis (23), wherein a adjusting device (25) is provided for setting an angle of inclination ($\alpha$) between the armrest element (2) and the armrest support (24), wherein the adjustment device (25) comprises the first operating element (5), wherein the first operating element (5) is mounted rotatably about its longitudinal axis ($L_1$) at least in sections within a housing (27) of the armrest element (2) and is operatively connected to an inclination adjustment mechanism (26).

11. Vehicle seat (100) with an armrest arrangement (3) according to one of the claims 9 to 10.

**Revendications**

1.  Module supplémentaire (1) pour un élément accoudoir (2) d'un siège, en particulier d'un siège de véhicule (100),

    le module supplémentaire (1) étant apte à être disposé sur l'élément accoudoir (2), un dispositif de transmission (4) étant prévu dans le module supplémentaire (1), dispositif au moyen duquel un premier élément de commande (5) de l'élément accoudoir (2) est apte à être actionné indirectement, le dispositif de transmission (4) étant apte à transmettre un mouvement d'un second élément de commande (6) du module supplémentaire (1) au premier élément de commande (5) de l'élément accoudoir (2), le premier élément de commande (5) et le second élément de commande (6) étant aptes à être couplés mécaniquement par le dispositif de transmission (4), le second élément de commande (6) étant apte à être actionné manuellement, **caractérisé par le fait que** le module supplémentaire (1) présente un corps de base (9) réalisé en forme de coque, le corps de base (9) présentant une surface d'ouverture (10), laquelle est configurée de telle sorte que le corps de base (9) peut reposer contre une face inférieure (2a) de l'élément accoudoir (2), le corps de base (9) présentant une première ouverture (16) dans laquelle le second élément de commande (6) est disposé et/ou fait saillie au moins par sections, un utilisateur pouvant actionner le second élément de commande (6) par cette première ouverture (16).

2.  Module supplémentaire (1) selon la revendication 1, **caractérisé par le fait que** le couplage mécanique est par liaison par la force et/ou par complémentarité de formes, le second élément de commande (6) comporte un second élément de couplage (8), lequel est couplé directement ou indirectement par liaison par la force et/ou par complémentarité de formes avec un premier élément de couplage (7) du premier élément de commande (5), le premier élément de couplage (7) et le second élément de couplage (8) présentant une denture frontale (7a, 8a), la denture frontale (7a) du premier élément de couplage (7) étant couplée directement ou indirectement à la denture frontale (8a) du second élément de couplage (8).

3.  Module supplémentaire (1) selon la revendication 2, **caractérisé par le fait qu'**une une augmentation du couple ou une augmentation de la vitesse angulaire du premier élément de commande (5) est provoquée par le dispositif de transmission (4), un rapport de transmission étant choisi entre le second élément de couplage (8) et le premier élément de couplage (7) de telle sorte que le couple transmis au premier élément de couplage (7) ou la vitesse angulaire transmise au premier élément de couplage est augmenté(e).

4.  Module supplémentaire (1) selon l'une des revendications précédentes, **caractérisé par le fait que** le module supplémentaire (1) est apte à être disposé sur l'élément accoudoir (2) au moyen d'une liaison par la force et/ou par complémentarité de formes, le corps de base (9) étant réalisé sensiblement rectangulaire, le corps de base (9) comportant une paroi de base (11), deux parois latérales allongées (12) et une paroi frontale avant (13).

5.  Module supplémentaire (1) selon la revendication 4, **caractérisé par le fait que** le second élément de commande (6) est monté à rotation dans le corps de base (9), le second élément de commande (6) étant réalisé cylindrique, le second élément de commande (6) étant disposé de manière rotative sur au moins un élément palier (15) du corps de base (9) au moyen d'un arbre de palier (14).

6. Module supplémentaire (1) selon la revendication 4, **caractérisé par le fait que**
le module supplémentaire (1) présente un premier module d'extension (17), lequel est apte à être disposé sur le corps de base (9), le premier module d'extension (17) étant un élément de commande et/ou un élément d'affichage et/ou un élément de stockage, le premier module d'extension (17) étant apte à être disposé sur la paroi frontale avant (13) du corps de base (9).

7. Module supplémentaire (1) selon la revendication 5, **caractérisé par le fait que**
la paroi frontale avant (13) présente une seconde ouverture (18) dans laquelle est apte à être introduite une saillie de fixation (19) du premier module d'extension (17), la seconde ouverture (18) et la saillie de fixation (19) étant réalisées de façon complémentaire, la saillie de fixation (19) comportant au moins un logement (20) dans lequel un élément de sécurité (21) est apte à être disposé.

8. Module supplémentaire (1) selon la revendication 4, **caractérisé par le fait que**
le module supplémentaire (1) présente un second module d'extension (22) lequel est apte à être disposé sur le corps de base (9), le second module d'extension (22) étant un élément de commande et/ou un élément d'affichage et/ou un élément de stockage, le second module d'extension (22) étant apte à être disposé sur une paroi latérale (12) du corps de base (9).

9. Ensemble accoudoir (3) pour un siège, en particulier pour un siège de véhicule (100) avec un élément accoudoir (2) sur lequel est disposé un module supplémentaire (1) selon l'une des revendications précédentes.

10. Ensemble accoudoir (3) selon la evendication 9, **caractérisé par le fait que**
l'élément accoudoir (2) est relié de manière pivotante à un support d'accoudoir (24) au moyen d'un axe de palier (23), un dispositif de réglage (25) étant prévu pour le réglage d'un angle d'inclinaison ($\alpha$) entre l'élément accoudoir (2) et le support d'accoudoir (24), le dispositif de réglage (25) comportant le premier élément de commande (5), le premier élément de commande (5) étant monté à rotation autour de son axe longitudinal ($L_1$) au moins par sections à l'intérieur d'un boîtier (27) de l'élément accoudoir (2) et étant relié de manière fonctionnelle à un mécanisme de réglage d'inclinaison (26).

11. Siège de véhicule (100) avec un ensemble accoudoir (3) selon l'une des revendications 9 à 10.

3

24

28

2

Fig. 1

X

Y

c

c

3

28

D

2

29

24a

α

24

2b

L1

5

D

25, 26

27, 27a

31

27b

24

Fig. 2

Z

X

Fig. 3

Fig. 4

Fig. 5

Fig. 6

Fig. 7

Fig. 8

Fig. 9

Fig. 10

Fig. 11

3

28

2

17

1

12

9

23

24

Fig. 12

Z

X

Y

Fig. 13

Fig. 14

Fig. 15

Fig. 16

Fig. 17

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

*   DE 10110330 A1